(19)

Europäisches
Patentamt
European
Patent Office
Office européen
des brevets

(11)  **EP 2 305 752 B1**

(12)  **EUROPEAN PATENT SPECIFICATION**

(45) Date of publication and mention
of the grant of the patent:
**24.08.2016  Bulletin 2016/34**

(51) Int Cl.:
***C08L 27/06*** *(2006.01)*      ***C08K 5/098*** *(2006.01)*
***C08L 29/04*** *(2006.01)*

(21) Application number: **09766624.2**

(86) International application number:
**PCT/JP2009/060892**

(22) Date of filing: **15.06.2009**

(87) International publication number:
**WO 2009/154176 (23.12.2009 Gazette 2009/52)**

(54) **POLYVINYL CHLORIDE RESIN COMPOSITION AND MANUFACTURING METHOD THEREOF**

POLYVINYLCHLORIDHARZZUSAMMENSETZUNG UND HERSTELLUNGSVERFAHREN DAFÜR

COMPOSITION DE RÉSINE DE POLY(CHLORURE DE VINYLE) ET SON PROCÉDÉ DE FABRICATION

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority:  **18.06.2008  JP 2008158630**

(43) Date of publication of application:
**06.04.2011  Bulletin 2011/14**

(73) Proprietors:
• **Kuraray Co., Ltd.**
  **Okayama 710-0801 (JP)**
• **Kuraray Europe GmbH**
  **65795 Hattersheim (DE)**

(72) Inventors:
• **KATO, Masaki**
  **Tainai-shi**
  **Niigata 959-2691 (JP)**

• **TSUBOI, Akira**
  **Kurashiki-shi**
  **Okayama 713-8550 (JP)**
• **NAKAMAE, Masato**
  **Kurashiki-shi**
  **Okayama 713-8550 (JP)**
• **FUSS Robert**
  **65926 Frankfurt am Main (DE)**
• **MICHEL Samuel**
  **65926 Frankfurt am Main (DE)**

(74) Representative: **Kisters, Michael Marcus**
  **Kuraray Europe GmbH**
  **Patents and Trademarks**
  **Mülheimer Strasse 26**
  **53840 Troisdorf (DE)**

(56) References cited:
  **FR-A5- 2 116 961      JP-A- 9 003 286**
  **JP-A- 9 031 281      JP-A- 9 201 921**
  **JP-A- 50 024 531      US-A- 5 118 741**

**Description**

TECHNICAL FIELD

The present invention relates to a polyvinyl chloride resin composition, and further, relates to a polyvinyl chloride resin composition that is excellent in thermal stability and transparency.

BACKGROUND ART

Although polyvinyl chloride resins have properties excellent in mechanical strength, flame retardancy, weather resistance, chemical resistance, and the like, and shaped articles thereof are widely used in various usages, they used to have a disadvantage of causing thermal decomposition mainly of dehydrochlorination when processed for thermoformaing. Therefore, shaped articles thus obtained used to have a problem, such as a decrease in mechanical properties or deterioration in color tone. To solve such problems, organic metal salts are used as a stabilizer, such as various metal soap, organic tin compounds, lead salt compounds, and organic phosphite. Among these organic metal salts, calcium-zinc-based stabilizers, barium-zinc-based stabilizers, and the like are particularly used often for the excellent initial thermal stability.

However, polyvinyl chloride resins with such a calcium-zinc-based stabilizer added thereto used to have problems that a long term thermal stability at high temperature is not sufficient and blackening is caused. Therefore, as a means for improvement of these disadvantages, polyvinyl chloride resin compositions are proposed to which an antioxidant is added or a compound having a hydroxyl group is added.

Patent Document 1 (JP 50-92947A) discloses a method of adding calcium soap, zinc soap, polyol or a derivative thereof, and a neutral inorganic calcium salt to a chloride-containing resin.

Patent Document 2 (JP 54-81359A) discloses a method of adding a water soluble polymer to a chloride-containing polymer.

Patent Document 3 (JP 57-147552A) discloses a method of adding a condensation reaction product of dipentaerythritol and dicarboxylic acid, zinc oxide, zinc carbonate or fatty acid zinc, and hydrotalcite to a chloride-containing resin.

Patent Document 4 (JP 60-238345A) discloses a method of adding a saponified product of an ethylene-vinyl acetate copolymer, having an ethylene unit content of from 20 to 50% and having a degree of saponification of a vinyl acetate unit of 96% or more, and a hydrotalcite-based compound to a thermoplastic resin.

Patent Document 5 (JP 1-178543A) discloses a method of adding metal soap and a saponified product of an ethylene-vinyl acetate copolymer having a copolymer composition that has an ethylene content of from 20 to 75 mol% and has a degree of saponification of a vinyl acetate portion of 50 mol% or more to a halogen-containing thermoplastic resin.

Patent Document 6 (JP 6-287387A) discloses a method of adding a metal salt of an organic acid and acetalized polyvinyl alcohol to a vinyl chloride-based resin.

Patent Document 7 (JP 9-3286A) discloses a method of adding partially saponified polyvinyl alcohol having a degree of saponification of from 70 to 95 mol%, having an average degree of polymerization of from 300 to 2000, and having a terminal mercapto group to a vinyl chloride-based resin.

Patent Document 8 (JP 9-31281A) discloses a method of adding a zinc compound, hydrotalcites, polyvinyl alcohol, and polymethyl methacrylate to a vinyl chloride-based resin.

Non-Patent Document 1 (Japanese Journal of Polymer Science and Technology Vol. 47, No. 3, 197 (1990)) discloses a method of adding zinc stearate-calcium stearate complex soap and completely saponified polyvinyl alcohol to polyvinyl chloride.

Non-Patent Document 2 (Japanese Journal of Polymer Science and Technology Vol. 47, No. 6, 509 (1990)) discloses a method of adding zinc stearate-calcium stearate complex soap and partially saponified polyvinyl alcohol having a degree of polymerization of 300 and having a degree of saponification of from 38 to 60 mol% to polyvinyl chloride.

Non-Patent Document 3 (Japanese Journal of Polymer Science and Technology Vol. 50, No. 2, 65 (1993)) discloses a method of adding zinc stearate-calcium stearate complex soap and an ethylene-vinyl alcohol copolymer having an ethylene content of 29 mol% or more to polyvinyl chloride.

Non-Patent Document 4 (Polymers & Polymer Composites, Vol. 11, 649 (2003)) discloses a method of adding zinc stearate-calcium stearate complex soap, and polyvinyl alcohol having a degree of polymerization of 300 and having a degree of saponification of from 38 to 60 mol% or an ethylene-vinyl alcohol copolymer having an ethylene content of 29 mol% or more to polyvinyl chloride.

Non-Patent Document 5 (Journal of the Adhesion Society of Japan Vol. 43, No. 2, 43 (2007)) discloses a method of adding polyvinyl alcohol having a degree of polymerization of 500 and having a degree of saponification of 88 mol% or polyvinyl alcohol having a degree of polymerization of 1700 and having a degree of saponification of 78 mol% or more, and polymethyl methacrylate to polyvinyl chloride.

FR 2 116 961 A5 discloses the use of polyvinylacohol having a viscosity of 4-60 mPa.s as costabilizer for poly(vinyl chloride). The disclosed polyvinyl alcohol having a degree of saponification of about 73 % have a degree of polymerization of 400 to 2500.

However, the polyvinyl chloride resin compositions described in Patent Documents 1 through 8 and Non-Patent Documents 1 through 5 have problems of being insufficient in the long term thermal stability and of decreasing transparency for being insufficient in dispersibility of the added polymer in the vinyl chloride shaped article.

PRIOR ART DOCUMENTS

Patent Documents

Patent Document 1: JP 50-92947A
Patent Document 2: JP 54-81359A
Patent Document 3: JP 57-147552A
Patent Document 4: JP 60-238345A
Patent Document 5: JP 1-178543A
Patent Document 6: JP 6-287387A
Patent Document 7: JP 9-3286A
Patent Document 8: JP 9-31281A

Non-Patent Documents

Non-Patent Document 1: Japanese Journal of Polymer Science and Technology Vol. 47, No. 3, 197 (1990)
Non-Patent Document 2: Japanese Journal of Polymer Science and Technology Vol. 47, No. 6, 509 (1990)
Non-Patent Document 3: Japanese Journal of Polymer Science and Technology Vol. 50, No. 2, 65 (1993)
Non-Patent Document 4: Polymers & Polymer Composites, Vol. 11, 649 (2003)
Non-Patent Document 5: Journal of the Adhesion Society of Japan Vol. 43, No. 2, 43 (2007)

SUMMARY OF THE INVENTION

PROBLEMS TO BE SOLVED BY THE INVENTION

It is an object of the present invention to provide a polyvinyl chloride resin composition that is good in thermal stability while being shaped and with which a shaped article excellent in transparency can be obtained.

MEANS FOR SOLVING THE PROBLEMS

As a result of intensive studies, the present inventors have found that it is possible to keep sufficient thermal stability while being shaped and transparency of a shaped article thereof by blending a specific amount of a vinyl alcohol-based polymer (hereinafter, may be abbreviated as PVA) having a degree of saponification of not less than 30 mol% and less than 75 mol% and having a viscosity average degree of polymerization of less than 300 to a polyvinyl chloride resin in a case of adding a stabilizer of a zinc compound to the polyvinyl chloride resin composition, and thus have come to complete the present invention.

That is, the problem is solved by providing a polyvinyl chloride resin composition comprising: from 0.005 to 5 parts by weight of a vinyl alcohol-based polymer having a degree of saponification of not less than 30 mol% and less than 75 mol% and having a viscosity average degree of polymerization of less than 300; and from 0.01 to 5 parts by weight of a zinc compound, based on 100 parts by weight of a polyvinyl chloride resin.

At this time, it is preferred that the vinyl alcohol-based polymer and the zinc compound are contained therein by adding them to the polyvinyl chloride resin.

It is also preferred to further comprise from 0.001 to 10 parts by weight of a lubricant based on 100 parts by weight of the polyvinyl chloride resin. At this time, it is preferred that the lubricant is a fatty acid ester of polyol, and particularly preferred that it is glycerin monostearate.

The problem is also solved by providing a method of producing a polyvinyl chloride resin composition, comprising adding: from 0.005 to 5 parts by weight of a vinyl alcohol-based polymer having a degree of saponification of not less than 30 mol% and less than 75 mol% and having a viscosity average degree of polymerization of less than 300; and from 0.01 to 5 parts by weight of a zinc compound, based on 100 parts by weight of a polyvinyl chloride resin to the polyvinyl chloride resin.

At this time, it is preferred to further comprise adding from 0.001 to 10 parts by weight of a lubricant based on 100 parts by weight of the polyvinyl chloride resin.

## EFFECTS OF THE INVENTION

In a case of using the resin composition of the present invention, it is possible to achieve effects of being good in thermal stability while being shaped and of high in transparency of a shaped article thereof.

## MODE FOR CARRYING OUT THE INVENTION

As a material to produce a polyvinyl chloride resin used in the present invention, as well as a vinyl chloride monomer, a mixture having a vinyl chloride monomer as a main component and a monomer that is copolymerizable therewith (50 weight% or more of the vinyl chloride monomer) is used. The monomer copolymerized with the vinyl chloride monomer may include vinyl esters, such as vinyl acetate and vinyl propionate, acrylic esters or methacrylic esters, such as methyl acrylate and ethyl acrylate, olefins, such as ethylene and propylene, maleic anhydride, acrylonitrile, styrene, vinylidene chloride, and the like.

As a method of producing the polyvinyl chloride resin using these monomers, it is possible to preferably employ a method of suspension polymerizing the monomer in the presence of polymerization initiator. In such a case, a normally used dispersion stabilizer is used that is, for example, a water soluble polymer, such as a water soluble cellulose ether, like methylcellulose, hydroxyethyl cellulose, hydroxypropyl cellulose, hydroxypropyl methylcellulose, polyvinyl alcohol, and gelatin; an oil soluble emulsifier, such as sorbitan monolaurate, sorbitan trioleate, glycerin tristearate, and an ethylene oxide-propylene oxide block copolymer; a water soluble emulsifier, such as polyoxyethylene sorbitan monolaurate, polyoxyethylene glycerin oleate, and sodium laurate. Among them, polyvinyl alcohol having a degree of saponification of from 65 to 99 mol% and having a degree of polymerization of from 500 to 4000 is preferably used, which is added preferably from 0.01 to 2.0 parts by weight to 100 parts by weight of vinyl chloride. Although the dispersion stabilizer for suspension polymerization may be used singly, a polyvinyl alcohol-based polymer having a degree of polymerization of from 100 to 4000 and having a degree of saponification of from 30 to 99 mol%, which is normally used for suspension polymerizing a vinyl-based compound, such as vinyl chloride, in an aqueous medium, can be used and it is preferred to be from 0.01 to 2.0 parts by weight to 100 parts by weight of a vinyl-based compound, such as vinyl chloride although the amount thereof to be added is not particularly limited.

As the initiator used for polymerization, an oil soluble or water soluble polymerization initiator can be used that has been used for polymerization of a vinyl chloride monomer conventionally. The oil soluble polymerization initiator may include, for example, percarbonate compounds, such as diisopropyl peroxydicarbonate, di-2-ethylhexyl peroxydicarbonate, and diethoxyethyl peroxydicarbonate; perester compounds, such as t-butyl peroxyneodecanoate, t-butyl peroxypivalate, t-hexyl peroxypivalate, and $\alpha$-cumyl peroxyneodecanoate; peroxides, such as acetyl cyclohexyl sulfonyl peroxide, 2,4,4-trimethylpentyl-2-peroxyphenoxyacetate, 3,5,5-trimethyl hexanoyl peroxide, and lauroyl peroxide; azo compounds, such as azobis-2,4-dimethylvaleronitrile and azobis (4-2, 4-dimethylvaleronitrile). The water soluble polymerization initiator may include, for example, potassium persulfate, ammonium persulfate, hydrogen peroxide, cumene hydroperoxide. These oil soluble or water soluble polymerization initiators can be used singly or in combination of two or more types.

Upon polymerization, it is possible to add various other additives to the polymerization reaction system as needed. The additives may include, for example, polymerization regulators, such as aldehydes, halogenated hydrocarbons, and mercaptans, polymerization inhibitors, such as a phenol compound, a sulfur compound, and an N-oxide compound, In addition, it is also possible to arbitrarily add a pH adjuster, a crosslinker,

Upon polymerization, the polymerization temperature is not particularly limited and it can also be adjusted to a low temperature at approximately 20°C as well as a high temperature at over 90°C. It is also one of preferred embodiments to use a polymerization vessel with a reflux condenser to enhance the heat removal efficiency of the polymerization reaction system.

For the polymerization, it is possible to arbitrarily add additives, such as antiseptics, mildewcides, antiblocking agents, defoamers, antifouling agents, and antistatics, that are normally used for polymerization as needed.

The PVA contained in the polyvinyl chloride resin composition of the present invention can be contained therein by, for example, being added to the polyvinyl chloride resin after polymerizing to obtain a polyvinyl chloride resin. The PVA can be added in powder or by being dissolved in water or an organic solvent to the polyvinyl chloride resin. As the PVA is added when polymerizing to obtain the polyvinyl chloride resin, the PVA acts as a dispersant for the polyvinyl chloride resin, so that it may affect the quality of the polyvinyl chloride resin thus obtained, such as the average particle diameter and the plasticizer absorbency.

The PVA has a degree of saponification of not less than 30 mol% and less than 75 mol%, preferably not less than 40 mol% and not more than73mol%, and particularly preferably not less than 45 mol% and not more than 70mol%. The long term thermal stability seriously decreases in a case of the degree of saponification of less than 30 mol%, and the dispersibility in the polyvinyl chloride resin is deteriorated in a case of the degree of saponification of 75 mol% or more, and thus it is not preferred. The degree of saponification of the PVA is a value measured in accordance with JIS K6726.

The PVA has a viscosity average degree of polymerization (hereinafter, may be referred to simply as a degree of polymerization) of less than 300, preferably 280 or less, and particularly preferably 260 or less. Although a lower limit of the viscosity average degree of polymerization is not particularly limited, the viscosity average degree of polymerization is preferably 50 or more and more preferably 100 or more from the perspective of production of the PVA. When the viscosity average degree of polymerization is 300 or more, the long term thermal stability seriously decreases and thus it is not preferred. The viscosity average degree of polymerization of the PVA is a value measured in accordance with JIS K6726. That is, it can be obtained by the following expression using limiting viscosity $[\eta]$ that is measured in water at 30°C after resaponifying the PVA to a degree of saponification of 99.5 mol% or more and purifying it.

$$P = ([\eta] \times 1000/8.29)^{(1/0.62)}$$

In the present invention, the PVA may be used singly or may also be used by mixing two or more types having different properties.

The PVA can be produced by polymerizing a vinyl ester-based monomer by employing a conventionally known process, such as bulk polymerization, solution polymerization, suspension polymerization, emulsion polymerization, and dispersion polymerization, and saponifying the vinyl ester-based polymer thus obtained. Polymerization processes preferred from the industrial perspective are solution polymerization, emulsion polymerization, and dispersion polymerization. For the polymerization operation, any polymerization system can be employed among batch process, semi-batch process, and continuous process.

The vinyl ester-based monomer allowed to be used for the polymerization may include, for example, vinyl acetate, vinyl formate, vinyl propionate, vinyl caprylate, vinyl versatate, and among them, vinyl acetate is preferred from the industrial perspective.

Upon the polymerization of the vinyl ester-based monomer, it is allowed to copolymerize the vinyl ester-based monomer with another monomer as long as not impairing the spirit of the present invention. Monomers that can be used may include, for example, acrylic acid and a salt thereof, acrylic acid esters, such as, methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, and octadecyl acrylate; methacrylic acid and a salt thereof; methacrylic acid esters, such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, and octadecyl methacrylate; acrylamide derivatives, such as acrylamide, N-methylacrylamide, N-ethylacrylamide, N,N-dimethylacrylamide, diacetone acrylamide, acrylamido propanesulfonic acid and a salt thereof, acrylamide propyl dimethylamine and a salt thereof or a quaternary salt thereof, and N-methylolacrylamide and a derivative thereof; methacrylamide derivatives, such as methacrylamide, N-methyl methacrylamide, N-ethyl methacrylamide, methacrylamide propanesulfonic acid and a salt thereof, methacrylamide propyl dimethylamine and a salt thereof or a quaternary salt thereof, and N-methylolmethacrylamide and a derivative thereof; vinyl ethers, such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; nitriles, such as acrylonitrile and methacrylonitrile; vinyl halides, such as vinyl chloride and vinyl fluoride; vinylidene halides, such as vinylidene chloride and vinylidene fluoride; allyl compounds, such as allyl acetate and allyl chloride; unsaturated dicarboxylic acids, such as maleic acid, itaconic acid, and fumaric acid, and salts thereof or esters thereof; vinyl silyl compounds, such as vinyl trimethoxysilane; and isopropenyl acetate.

Upon the polymerization of the vinyl ester-based monomer, for the purpose of adjustment of the degree of polymerization of the PVA thus obtained a chain transfer agent is allowed to coexist. The chain transfer agent may include aldehydes, such as acetaldehyde, propionaldehyde, butylaldehyde, and benzaldehyde; ketones, such as acetone, methyl ethyl ketone, hexanone, and cyclohexanone; mercaptans, such as 2-hydroxy ethanethiol; and halogenated hydrocarbons, such as trichloroethylene and perchloroethylene, and among all, aldehydes and ketones are used preferably. Although the amount of the chain transfer agent to be added is determined according to the chain transfer constant of the chain transfer agent to be added and the intended degree of polymerization of the PVA, it is generally desired to be from 0.1 to 10 weight% to the vinyl ester-based monomer.

In the present invention, it is also possible to use a PVA having a high content of 1,2-glycol bond that is obtained by polymerizing the vinyl ester-based monomer at a temperature condition higher than normal polymerization. In this case, the content of 1, 2-glycol bond is preferably 1. 9 mol% or more, more preferably 2.0 mol% or more, and even more preferably 2.1 mol% or more.

To the saponification reaction of the vinyl ester-based polymer, an alcoholysis or hydrolysis reaction can be applied using conventionally known basic catalysts, such as sodium hydroxide, potassium hydroxide, and sodium methoxide, or acid catalysts, such as p-toluenesulfonic acid. The solvent used for the saponification reaction may include alcohols, such as methanol and ethanol; esters, such as methyl acetate and ethyl acetate; ketones, such as acetone and methyl ethyl ketone; and aromatic hydrocarbons, such as benzene and toluene, and they can be used singly or in combination of two or more types. Among all, it is preferred for the convenience to carry out a saponification reaction using a methanol or mixed solution of methanol and methyl acetate as the solvent in the presence of sodium hydroxide as the basic catalyst.

The PVA blended in the polyvinyl chloride resin composition is from 0.005 to 5 parts by weight based on 100 parts by weight of the polyvinyl chloride resin, and preferably from 0.04 to 3 parts by weight. The long term thermal stability is insufficient in a case of less than 0.005 parts by weight, and in a case of exceeding 5 parts by weight, the polyvinyl chloride resin is colored and it is not preferred.

In a case of adding the PVA used for the present invention when polymerizing to obtain the polyvinyl chloride resin, most of the PVA is removed by washing of the polyvinyl chloride resin after producing the resin, so that the content of the PVA in the polyvinyl chloride resin composition becomes less than 0.005 parts by weight and thus the effect as a thermostabilization aid is not obtained.

In the present invention, the PVA may also contain an acid having pKa at 25°C of from 3.5 to 5.5 and/or a metal salt thereof. The type of the acid is not particularly limited, and the specific examples may include acetic acid (pKa of 4.76), propionic acid (pKa of 4.87), butyric acid (pKa of 4.63), octanoic acid (pKa of 4.89), adipic acid (pKa of 5.03), benzoic acid (pKa of 4.00), formic acid (pKa of 3.55), valeric acid (pKa of 4.63), heptanoic acid (pKa of 4.66), lactic acid (pKa of 3.66), phenylacetic acid (pKa of 4.10), isobutyric acid (pKa of 4.63), cyclohexanecarboxylic acid (pKa of 4.70), Particularly preferably used acids are acetic acid, propionic acid, and lactic acid. It is also possible to use metal salts of the acids above. Although the type of the metal salt is not particularly limited, a salt of alkali metal, such as sodium, potassium, magnesium, or calcium, is normally used.

The acid having pKa of from 3.5 to 5.5 and/or a metal salt thereof is preferably contained at a ratio of from 0.05 to 5 parts by weight based on 100 parts by weight of the PVA, more preferably from 0.1 to 3 parts by weight, and even more preferably from 0.15 to 2 parts by weight. The long term thermal stability decreases in a case that the acid and/or a metal salt thereof is contained less than 0.05 parts by weight to the PVA, and in a case of exceeding 5 parts by weight, the polyvinyl chloride resin is colored and thus it is not preferred. The method of containing the acid and/or a metal salt thereof in a predetermined amount is not particularly specified and may include, for example, a method of adjusting the type, the amount, of the alkali catalyst used for the saponification when producing the PVA, a method of adding or removing the acid and/or a metal salt thereof after producing the PVA.

The zinc compound used in the present invention may include aliphatic carboxylates of zinc, such as zinc stearate, zinc laurate, and zinc oleate, aromatic carboxylic acid zinc, such as zinc benzoate and zinc p-tert butyl benzoate, zinc salts of an organic acid, such as an amino acid zinc salt and a phosphate zinc salt, inorganic zinc salts, such as zinc oxide and zinc carbonate, The zinc compound is contained from 0.01 to 5 parts by weight based on 100 parts by weight of the polyvinyl chloride resin, and preferably from 0.05 to 3 parts by weight. The sufficient thermal stability effect is not obtained in a case of the content less than 0.01 parts by weight, and in a case of exceeding 5 parts by weight, a shaped article of the vinyl chloride is blackened and thus it is not preferred. The zinc compound can be contained by adding it to the polyvinyl chloride resin after polymerizing to obtain a polyvinyl chloride resin.

Together with the polyvinyl chloride resin composition of the present invention, it is possible to use stabilizers, phenolic antioxidants, phosphorous antioxidants, light stabilizers, ultraviolet absorbers, antifog agents, antistatics, flame retardants, lubricants, modifiers, reinforcements, pigments, blowing agents, plasticizers, and the like that are normally used. To the polyvinyl chloride resin composition of the present invention, another resin may also be mixed as long as not impairing the mechanical properties.

The lubricants may include hydrocarbons, such as liquid paraffin, natural paraffin, micro wax, and polyethylene wax; fatty acids, such as stearic acid and lauric acid; fatty acid amides, such as stearic amide, palmitic amide, methylenebisstearoamide, and ethylenebisstearoamide; fatty acid esters of monoalcohol, such as butyl stearate; fatty acid esters of polyol, such as hydrogenated castor oil, ethylene glycol monostearate, glycerin monostearate, and triethylene glycol di-2-ethyl hexanoate; alcohols, such as cetyl alcohol and stearyl alcohol. Among all, in a case of using a fatty acid ester of polyol, the effect of the present invention is exhibited even more. At this time, it is preferred to be a fatty acid monoester of polyol and also preferred to be a fatty acid ester of glycerin. In addition, the fatty acid of the fatty acid ester preferably has a carbon number of from 8 to 22 and is even more preferably a stearic acid ester. Among them, glycerin monostearate is particularly preferred. The lubricant is added preferably from 0.001 to 10 parts by weight based on 100 parts by weight of the polyvinyl chloride resin, and even more preferably from 0.05 to 5 parts by weight.

As the stabilizer, well known ones can be used and they may specifically include organic metal salts, such as soap of alkali earth metals, like calcium soap and barium soap, aluminum soap, and organic phosphoric acid metal salts; inorganic metal salts, such as metal oxide, metal hydroxide, metal carbonate, and inorganic complex metal salts, like zeolite; halogen oxy acid salts, such as barium chlorate, barium perchlorate, and sodium perchlorate; and non-metallic stabilizers, such as β-diketone, polyol, and epoxy compounds.

The plasticizer may include, for example, ester-based plasticizers, such as an ester of an acid, like phthalic acid, trimellitic acid, pyromellitic acid, adipic acid, sebacic acid, and azelaic acid, and a single linear or branched alkyl alcohol, or a mixture thereof, like n-propanol, isopropanol, n-butanol, isobutanol, tert-butanol, n-pentanol, isopentanol, tert-pentanol, n-hexanol, isohexanol, n-heptanol, isoheptanol, n-octanol, isooctanol, 2-ethylhexanol, n-nonanol, isononanol, n-decanol, isodecanol, lauryl alcohol, myristyl alcohol, palmityl alcohol, and stearyl alcohol, and an ester of butanediol and adipic acid; epoxy-based plasticizers, such as epoxidized soybean oil, epoxidized linseed oil, epoxidized castor oil, epoxidized linseed oil fatty acid butyl, octyl epoxy stearate, epoxy triglyceride, diisodecyl epoxy-hexahydrophthalate, or a low molecular weight reaction product resin of bisphenol A with epichlorohydrin; and phosphate-based plasticizers, such as tricresyl phosphate, trixylenyl phosphate, monobutyl dixylenyl phosphate, and trioctyl phosphate.

The phenolic antioxidant may be any of those used normally, and may include, for example, 2,6-ditertiary butyl-p-cresol, 2,6-diphenyl-4-octadecyloxyphenol, stearyl(3,5-ditertiary butyl-4-hydroxyphenyl)-propionate, distearyl(3,5-ditertiary butyl-4-hydroxybenzyl)phosphonate, thiodiethylene glycol bis[(3,5-ditertiary butyl-4-hydroxyphenyl)propionate], 1,6-hexamethylene bis[(3,5-ditertiary butyl-4-hydroxyphenyl)propionate], 1,6-hexamethylene bis[(3,5-ditertiary butyl-4-hydroxyphenyl)propionic acid amide], 4,4'-thiobis(6-tertiary butyl-m-cresol), 2,2'-methylene bis(4-methyl-6-tertiary butylphenol), 2,2'-methylene bis(4-ethyl-6-tertiary butylphenol), bis[3,3-bis(4-hydroxy-3-tertiary butylphenyl)butyric acid]glycol ester, 2,2'-ethylidene bis(4,6-ditertiary butylphenol), 2,2' ethylidene bis(4-secondary butyl-6-tertiary butylphenol), 1,1,3-tris(2-methyl-4-hydroxy-5-tertiary butylphenyl)butane, bis[2-tertiary butyl-4-methyl-6-(2-hydroxy-3-tertiary butyl-5-methylbenzyl)phenyl]terephthalate, 1,3,5-tris(3,5-ditertiary butyl-4-hydroxybenzyl)-2,4,6-trimethylbenzene, 1,3,5-tris[(3,5-ditertiary butyl-4-hydroxyphenyl)propionyloxyethyl]isocyanurate, tetrakis[methylene-3-(3,5-ditertiary butyl-4-hydroxyphenyl)propionate]methane, 2 tertiary butyl-4-methyl-6-(2-acryloyloxy-3-tertiary butyl-5-methylbenzyl)phenol, 3,9-bis[1,1-dimethyl-2-{(3-tertiary butyl-4-hydroxy-5-methylphenyl)propionyloxy}ethyl]-2,4,8,10 -tetraoxaspiro[5.5]undecane, and triethylene glycol bis[(3-tertiary butyl-4-hydroxy-5-methylphenyl)propionate]. The phenolic antioxidant is added preferably from 0.01 to 5 parts by weight based on 100 parts by weight of the polyvinyl chloride resin, and even more preferably from 0.1 to 3 parts by weight.

The phosphorous antioxidant may be any of those used normally, and may include, for example, trisnonylphenyl phosphite, tris(2,4-ditertiary butylphenyl)phosphite, tris[2-tertiary butyl-4-(3-tertiary butyl-4-hydroxy-5-methylphenylthio)-5-methylphenyl]phosphit e, tridecyl phosphite, octyl diphenyl phosphite, di(decyl) monophenyl phosphite, di(tridecyl)pentaerythritol diphosphite, distearyl pentaerythritol diphosphite, di(nonylphenyl)pentaerythritol diphosphite, bis(2,4-ditertiary butylphenyl)pentaerythritol diphosphite, bis(2,6-ditertiary butyl-4-methylphenyl)pentaerythritol diphosphite, bis(2,4,6-tritertiary butylphenyl)pentaerythritol diphosphite, tetra(tridecyl)isopropylidenediphenol diphosphite, tetra(tridecyl)-4,4'-n-butylidenebis(2-tertiary butyl-5-methylphenol)diphosphite, hexa(tridecyl)-1,1,3-tris(2-methyl-4-hydroxy-5-tertiary butylphenyl)butane triphosphite, tetrakis(2,4-ditertiary butylphenyl)biphenylene diphosphonite, 9,10-dihydro-9-oxa-10-phosphaphenanthrene-10-oxide, and 2,2'-methylenebis(4-methyl-6-tertiary butylphenyl)-2-ethylhexyl phosphite. The phosphorous antioxidant is added preferably from 0.001 to 5 parts by weight based on 100 parts by weight of the polyvinyl chloride resin, and even more preferably from 0.005 to 3 parts by weight.

The ultraviolet absorber may include, for example, 2-hydroxybenzophenones, such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2-hydroxyphenyl) benzotriazoles, such as 2-(2-hydroxy-5-tertiary octylphenyl)benzotriazole, 2-(2-hydroxy-3,5-ditertiary butylphenyl)-5-chlorobenzotriazole, 2-(2-hydroxy-3-tertiary butyl-5-methylphenyl)-5-chlorobenzotriazole, 2-(2-hydroxy-3,5-dicumylphenyl)benzotriazole, 2,2'-methylenebis(4-tertiary octyl-6-benzotriazolyl)phenol, and a polyethylene glycol ester of 2-(2-hydroxy-3-tertiary butyl-5-carboxyphenyl)benzotriazole; benzoates, such as phenyl salicylate resorcinol monobenzoate, 2,4-ditertiary butylphenyl-3,5-ditertiary butyl-4-hydroxybenzoate, and hexadecyl-3,5-ditertiary butyl-4-hydroxybenzoate; substituted oxanilides, such as 2-ethyl-2'-ethoxyoxanilide, and 2-ethoxy-4'-dodecyloxanilide; and cyanoacrylates, such as ethyl-α-cyano-β,β-diphenylacrylate and methyl-2-cyano-3-methyl-3-(p-methoxyphenyl)acrylate. The ultraviolet absorber is added preferably from 0.005 to 10 parts by weight based on 100 parts by weight of the vinyl chloride, and even more preferably from 0.01 to 5 parts by weight.

The light stabilizer may include, for example, hindered amine compounds, such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, bis(1,2,2,6,6-pentamethyl-4-piperidyl)sebacate, tetrakis(2,2,6,6-tetramethyl-4-piperidyl)butanetetracarboxy late, tetrakis(1,2,2,6,6-pentamethyl-4-piperidyl)butanetetracarbo xylate, bis(1,2,2,6,6-pentamethyl-4-piperidyl) di(tridecyl) -1,2,3,4-butanetetracarboxylate, bis(1,2,2,6,6-pentamethyl-4-hydroxybenzyl)malonate, a 1-(2-hydroxyethyl)-2,2,6,6-tetramethyl-4-piperidinol/diethy 1 succinate polycondensation product, a 1,6-bis(2,2,6,6-tetraethyl-4-piperidylamino)hexane/dibromoe thane polycondensation product, a 1,6-bis(2,2,6,6-tetramethyl-4-piperidylamino)hexane/2,4-dic hloro-6-morpholino-s-triazine polycondensation product, a 1,6-bis(2,2,6,6-tetramethyl-4-piperidylamino)hexane/2,4-dic hloro-6-tertiary octylamino-s-triazine polycondensation product, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,6,11-tris[2,4-bis(N-butyl-N-(2,2,6,6-tetramethyl-4-piperi dyl)amino)-s-triazine-6-ylamino]undecane, and 1,6,11-tris[2,4-bis(N-butyl-N-(1,2,2,6,6-pentamethyl-4-pipe ridyl)amino)-s-triazine-6-ylamino]undecane. The light stabilizer is added preferably from 0.001 to 5 parts by weight based on 100 parts by weight of the polyvinyl chloride resin, and even more preferably from 0.05 to 3 parts by weight.

A method of processing the polyvinyl chloride resin composition of the present invention may include extrusion processing, calender processing, blow molding, press processing, powder molding, injection molding,

Examples

The present invention is described below by way of Examples further in detail. In Examples and Comparative Examples below, parts and % denote parts by weight and weight%, respectively, unless otherwise specified.

Example 1

(Production of Polyvinyl Chloride Resin)

Polyvinyl alcohol, having a degree of polymerization of 850 and having a degree of saponification of 72 mol%, in an amount equivalent to 600 ppm with respect to vinyl chloride was dissolved in deionized water to prepare a dispersion stabilizer. The dispersion stabilizer thus obtained was charged in a glass-lined autoclave on which an antifouling agent, NOXOL WSW (produced by CIRS) was applied so as to have a solid content of 0.3 g/m$^2$. Subsequently, 0.04 parts of a 70% toluene solution of diisopropyl peroxydicarbonate was charged in the glass-lined autoclave, and after removing oxygen by degassing until the pressure in the autoclave becomes 0.0067 MPa, 30 parts of vinyl chloride was charged therein and the contents in the autoclave were raised in temperature to 57°C while being stirred to initiate polymerization. The pressure in the autoclave when initializing the polymerization was 0.83 MPa. After seven hours since the initiation of polymerization, the polymerization is terminated at the time of the pressure in the autoclave being 0.44 MPa, and unreacted vinyl chloride was removed, followed by taking the polymerization reaction product out to dry it at 65°C overnight, and thus a polyvinyl chloride resin (PVC) was obtained.

(Production of PVA)

In a 6 L reaction vessel provided with a stirrer, a nitrogen inlet port, an additive inlet port, and an initiator addition port, 2450 g of vinyl acetate and 1050 g of methanol were charged and were raised in temperature to 60°C, followed by purging inside the system with nitrogen by nitrogen bubbling for 30 minutes. As a chain transfer agent, a 20% concentration solution of 2-mercapto ethanol (hereinafter referred to as 2-ME) dissolved in methanol was prepared and was purged with nitrogen by bubbling with a nitrogen gas. The temperature within the reaction vessel was adjusted to 60°C and 0.34 g of 2-ME was added thereto, and then 1.2 g of 2,2'-azobis(4-methoxy-2,4-dimethylvaleronitrile) was added to initiate polymerization. The polymerization temperature was maintained at 60°C during the polymerization, and the 20% methanol solution of 2-ME was continuously added at 10.6 mL/hr. It was cooled after four hours when the polymerization conversion reached 60% to terminate the polymerization. Subsequently, unreacted vinyl acetate was removed under reduced pressure to obtain a methanol solution of polyvinyl acetate (PVAc). A methanol solution of NaOH (10% concentration) was added to a PVAc solution adjusted to 30% so as to make the alkali molar ratio (mole number of NaOH/mole number of vinyl ester unit in PVAc) to become 0.003 for saponification. By way of the above operation, a PVA was obtained that has a degree of polymerization of 260 and has a degree of saponification of 60 mol%. The sodium acetate content measured by isotachophoresis was 1.5%.

(Thermal Stability Test)

To 100 parts by weight of the polyvinyl chloride resin, a PVA in an amount shown in Table 1, 2 parts by weight of zinc stearate, 1 part by weight of calcium stearate, and 20 parts by weight of dioctyl phthalate were mixed. The polyvinyl chloride resin composition was kneaded at 160°C for five minutes with a test roll to fabricate a sheet having a thickness of 0.45 mm. The sheet was cut into 50 x 70 mm. The sheet pieces were put into a gear oven, and the time period until they were completely blackened at a temperature of 180°C was measured to make it an index of the thermal stability.

(Transparency Test)

To 100 parts by weight of the polyvinyl chloride resin, a PVA in an amount shown in Table 1, 2 parts by weight of zinc stearate, 1 part by weight of barium stearate, and 45 parts by weight of dioctyl phthalate were mixed. The polyvinyl chloride resin composition was kneaded at 150°C for five minutes with a test roll to fabricate a sheet having a thickness of 0.8 mm. The sheet was cut into 45 x 30 mm. Several of the sheets were stacked and pressed at 185°C for five minutes to fabricate a test piece having a thickness of 5 mm, and the transparency was compared visually and determined in accordance with the following standards.

A: transparent
B: slightly low in transparency
C: low in transparency
D: seriously low in transparency

Examples 2 through 6

In the same method as Example 1 other than modifying the weights of the vinyl acetate and methanol charged upon polymerization and modifying the alkali molar ratio for saponification, a PVA shown in Table 1 was obtained. The thermal stability and the transparency were evaluated in the same way as Example 1. The results of evaluation are shown in Table 1.

Example 7

In the same method other than adding sodium acetate, in addition, to 100 parts by weight of the PVA obtained in Example 1 so as to make the sodium acetate content to be 5 parts by weight, a PVA shown in Table 1 was obtained. The thermal stability and the transparency were evaluated in the same way as Example 1. The results of evaluation are shown in Table 1.

Examples 8 through 11

They are examples of adding 0.5 parts by weight of glycerin monostearate, as a lubricant, based on 100 parts by weight of the polyvinyl chloride resin. It was mixed in the same way as Example 1 in a formula shown in Table 1, and the thermal stability and the transparency were evaluated. The results of evaluation are shown in Table 1.

Comparative Examples 1 through 5

In the same method as Example 1 other than modifying the weights of the vinyl acetate and methanol charged upon polymerization and modifying the alkali molar ratio for saponification, a PVA shown in Table 1 was obtained. The thermal stability and the transparency were evaluated in the same way as Example 1. The results of evaluation are shown in Table 1. Any of them were insufficient in the thermal stability and were also low in the transparency.

Comparative Examples 6, 7

In the same method as Example 1 other than modifying the amount of the PVA blended therein relative to the polyvinyl chloride resin (PVC) as shown in Table 1, the thermal stability and the transparency were evaluated. The results of evaluation are shown in Table 1. The thermal stability was insufficient in a case of too little PVA blended therein, and the transparency was low in a case of too much PVA blended therein.

Comparative Example 8

In the same method as Example 1 other than not adding the PVA to the polyvinyl chloride resin, the thermal stability and the transparency were evaluated. The results of evaluation are shown in Table 1. The thermal stability was insufficient.

Comparative Examples 9, 10

In the same method as Example 1 other than modifying the amount of zinc stearate blended therein as shown in Table 1, the thermal stability and the transparency were evaluated. The results of evaluation are shown in Table 1.

Any of them were insufficient in the thermal stability.

Comparative Examples 11 through 14

They are examples of adding 0.5 parts by weight of glycerin monostearate, as a lubricant, based on 100 parts by weight of the polyvinyl chloride resin. It was mixed in the same way as Example 1 in a formula shown in Table 1, and the thermal stability and the transparency were evaluated. The results of evaluation are shown in Table 1.

[Table 1]

| | PVA | | Evaluation Conditions and Results | | | | |
|---|---|---|---|---|---|---|---|
| | Degree of Polymerization | Degree of Saponification (mol%) | PVA (parts/PVC 100 parts) | Zinc Compound (parts/PVC 100 parts) | Glycerin Monostearate (parts/PVC 100 parts) | Time Period to be Blackened (min) | Transparency |
| Example 1 | 260 | 60 | 1 | 2 | 0 | 120 | A |
| Example 2 | 260 | 45 | 1 | 2 | 0 | 110 | A |
| Example 3 | 260 | 40 | 1 | 2 | 0 | 90 | A |
| Example 4 | 260 | 73 | 1 | 2 | 0 | 75 | A |
| Example 5 | 260 | 70 | 1 | 2 | 0 | 85 | A |
| Example 6 | 290 | 60 | 1 | 2 | 0 | 75 | B |
| Example 7 | 260 | 60 | 1 *1 | 2 | 0 | 125 | B |
| Example 8 | 260 | 60 | 1 | 2 | 0.5 | 140 | A |
| Example 9 | 260 | 45 | 1 | 2 | 0.5 | 130 | A |
| Example 10 | 260 | 40 | 1 | 2 | 0.5 | 110 | A |
| Example 11 | 260 | 73 | 1 | 2 | 0.5 | 100 | A |
| Comparative Example 1 | 300 | 60 | 1 | 2 | 0 | 60 | C |
| Comparative Example 2 | 300 | 38 | 1 | 2 | 0 | 60 | C |
| Comparative Example 3 | 600 | 37 | 1 | 2 | 0 | 50 | D |
| Comparative Example 4 | 260 | 80 | 1 | 2 | 0 | 60 | D |
| Comparative Example 5 | 260 | 10 | 1 | 2 | 0 | 45 | C |
| Comparative Example 6 | 260 | 60 | 0.001 | 2 | 0 | 45 | B |

EP 2 305 752 B1

(continued)

| | PVA | | Evaluation Conditions and Results | | | | |
|---|---|---|---|---|---|---|---|
| | Degree of Polymerization | Degree of Saponification (mol%) | PVA (parts/PVC 100 parts) | Zinc Compound (parts/PVC 100 parts) | Glycerin Monostearate (parts/PVC 100 parts) | Time Period to be Blackened (min) | Transparency |
| Comparative Example 7 | 260 | 60 | 10 | 2 | 0 | 120 | D |
| Comparative Example 8 | - | - | 0 | 2 | 0 | 45 | A |
| Comparative Example 9 | 260 | 60 | 1 | 0.001 | 0 | 30 | A |
| Comparative Example 10 | 260 | 60 | 1 | 10 | 0 | 40 | A |
| Comparative Example 11 | 300 | 60 | 1 | 2 | 0.5 | 80 | B |
| Comparative Example 12 | 600 | 37 | 1 | 2 | 0.5 | 70 | C |
| Comparative Example 13 | 260 | 80 | 1 | 2 | 0.5 | 80 | C |
| Comparative Example 14 | 260 | 10 | 1 | 2 | 0.5 | 60 | C |
| *1) Added to make Sodium Acetate Content to be 5 parts by weight based on 100 parts of PVA | | | | | | | |

EP 2 305 752 B1

**Claims**

1.  A polyvinyl chloride resin composition comprising: from 0.005 to 5 parts by weight of a vinyl alcohol-based polymer having a degree of saponification of not less than 30 mol% and less than 75 mol% and having a viscosity average degree of polymerization of less than 300; and from 0.01 to 5 parts by weight of a zinc compound, based on 100 parts by weight of a polyvinyl chloride resin.

2.  The polyvinyl chloride resin composition according to claim 1, wherein the vinyl alcohol-based polymer and the zinc compound are contained therein by adding them to the polyvinyl chloride resin.

3.  The polyvinyl chloride resin composition according to claim 1 or 2, further comprising from 0.001 to 10 parts by weight of a lubricant based on 100 parts by weight of the polyvinyl chloride resin.

4.  The polyvinyl chloride resin composition according to claim 3, wherein the lubricant is a fatty acid ester of polyol.

5.  The polyvinyl chloride resin composition according to claim 4, wherein the fatty acid ester of polyol is glycerin monostearate.

6.  A method of producing a polyvinyl chloride resin composition, comprising adding: from 0.005 to 5 parts by weight of a vinyl alcohol-based polymer having a degree of saponification of not less than 30 mol% and less than 75 mol% and having a viscosity average degree of polymerization of less than 300; and from 0.01 to 5 parts by weight of a zinc compound, based on 100 parts by weight of a polyvinyl chloride resin to the polyvinyl chloride resin.

7.  The method of producing a polyvinyl chloride resin composition according to claim 6, further comprising adding from 0.001 to 10 parts by weight of a lubricant based on 100 parts by weight of the polyvinyl chloride resin.


**Patentansprüche**

1.  Polyvinylchloridharzzusammensetzung, die Folgendes umfasst: 0,005 bis 5 Gewichtsanteile eines auf Vinylalkohol basierenden Polymers, das einen Verseifungsgrad von nicht weniger als 30 Mol% und weniger als 75 Mol% aufweist und einen durchschnittlichen Viskositäts-Polymerisationsgrad von weniger als 300 aufweist ; sowie 0,01 bis 5 Gewichtsanteile einer Zinkverbindung, bezogen auf 100 Gewichtsanteile eines Polyvinylchloridharzes.

2.  Polyvinylchloridharzzusammensetzung nach Anspruch 1, wobei das auf Vinylalkohol basierende Polymer und die Zinkverbindung darin enthalten sind durch Zugabe dieser zu dem Polyvinylchloridharz.

3.  Polyvinylchloridharzzusammensetzung nach Anspruch 1 oder 2, die ferner 0,001 bis 10 Gewichtsanteile eines Gleitmittels umfasst, bezogen auf 100 Gewichtsanteile des Polyvonylchloridharzes.

4.  Polyvinylchloridharzzusammensetzung nach Anspruch 3, wobei das Gleitmittel ein Fettsäureester von Polyol ist.

5.  Polyvinylchloridharzzusammensetzung nach Anspruch 4, wobei der Fettsäureester von Polyol Glycerinmonostearat ist.

6.  Verfahren zum Herstellen einer Polyvinylchloridharzzusammensetzung, welches das Zugeben von 0,005 bis 5 Gewichtsanteilen eines auf Vinylalkohol basierenden Polymers, das einen Verseifungsgrad von nicht weniger als 30 Mol% und weniger als 75 Mol% aufweist und einen durchschnittlichen Viskositäts-Polymerisationsgrad von weniger als 300 aufweist ; sowie 0,01 bis 5 Gewichtsanteilen einer Zinkverbindung, bezogen auf 100 Gewichtsanteile eines Polyvinylchloridharzes zu dem Polyvinylchloridharz umfasst.

7.  Verfahren zum Herstellen einer Polyvinylchloridharzzusammensetzung nach Anspruch 6, das ferner das Zugeben von 0,001 bis 10 Gewichtsanteilen eines Gleitmittels umfasst, bezogen auf 100 Gewichtsanteile des Polyvonylchloridharzes.

**Revendications**

1.  Composition de résine à base de chlorure de polyvinyle comprenant : de 0,005 à 5 parties en poids d'un polymère à base d'alcool vinylique possédant un degré de saponification d'au moins 30 % molaire et de moins de 75 % molaire et possédant un degré moyen de viscosité de polymérisation de moins de 300 ; et de 0,01 à 5 parties en poids d'un composé de zinc, sur la base de 100 parties en poids d'une résine à base de chlorure de polyvinyle.

2.  Composition de résine à base de chlorure de polyvinyle selon la revendication 1, dans laquelle le polymère à base d'alcool vinylique et le composé de zinc sont contenus dans celle-ci en les ajoutant à la résine à base de chlorure de polyvinyle.

3.  Composition de résine à base de chlorure de polyvinyle selon la revendication 1 ou 2, comprenant en outre de 0,001 à 10 parties en poids d'un lubrifiant sur la base de 100 parties en poids de la résine à base de chlorure de polyvinyle.

4.  Composition de résine à base de chlorure de polyvinyle selon la revendication 3, dans laquelle le lubrifiant est un ester d'acide gras de polyol.

5.  Composition de résine à base de chlorure de polyvinyle selon la revendication 4, dans laquelle l'ester d'acide gras de polyol est le monostéarate de glycérine.

6.  Procédé de production d'une composition de résine à base de chlorure de polyvinyle, comprenant l'addition : de 0,005 à 5 parties en poids d'un polymère à base d'alcool vinylique possédant un degré de saponification d'au moins 30 % molaire et de moins de 75 % molaire et possédant un degré moyen de viscosité de polymérisation de moins de 300 ; et de 0,01 à 5 parties en poids d'un composé de zinc, sur la base de 100 parties en poids d'une résine à base de chlorure de polyvinyle.

7.  Procédé de production d'une composition de résine à base de chlorure de polyvinyle selon la revendication 6, comprenant en outre l'addition de 0,001 à 10 parties en poids d'un lubrifiant sur la base de 100 parties en poids de la résine à base de chlorure de polyvinyle.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 50092947 A
- JP 54081359 A
- JP 57147552 A
- JP 60238345 A
- JP 1178543 A
- JP 6287387 A
- JP 9003286 A
- JP 9031281 A
- FR 2116961 A5

### Non-patent literature cited in the description

- *Japanese Journal of Polymer Science and Technology,* 1990, vol. 47 (3), 197
- *Japanese Journal of Polymer Science and Technology,* 1990, vol. 47 (6), 509
- *Japanese Journal of Polymer Science and Technology,* 1993, vol. 50 (2), 65
- *Polymers & Polymer Composites,* 2003, vol. 11, 649
- *Journal of the Adhesion Society of Japan,* 2007, vol. 43 (2), 43